# EUROPEAN PATENT APPLICATION

(11) **EP 0 632 354 A2**
(43) Date of publication of application: **04.01.1995**
(21) Application number: 94870111.5
(22) Date of filing: 28.06.1994
(51) Int. Cl.: G05D 7/01

(54) **Pressure vessel for supplying a liquid at a constant flow rate**

(30) Priority: 29.06.1993 BE 9300667
(71) Applicant: APPLITEK, B-9800 Deinze (BE)
(72) Inventor: Laurier, J., 9800 Deinze (BE)
(74) Representative: Pieraerts, Jacques

(57) **Abstract**

A pressure vessel for supplying a liquid at a constant flow rate, characterized in that it comprises : a) an airtight lockable filling opening for introducing the liquid ; b) at the bottom or substantially at the bottom an outlet opening (4) for allowing the liquid to flow out of the pressure vessel, and c) a vertically or substantially vertically extending tube (5) passing through the pressure vessel down to a level lower than the liquid level so that the hydrostatic pressure on the outlet opening remains constant.

## Description

The invention relates to a pressure vessel for supplying a liquid at a constant flow rate.

Both in laboratoria and in the industry the problem of adding a liquid at a constant flow rate (volume/unit of time) is a very common technique which is applied with various means while using different methods.

These techniques comprise one or more of the following solutions :
a) adding the liquid by means of a pump or by using a buret ;
b) using a constant pressure vessel, the constant level of which is remained constant by a continuous feeding through a pump and an overflow from a storage vessel or by a level measurement coupled to a valve for allowing liquid to enter into the pressure vessel upon lowering of the level and closes when the level is reached again ;
c) a usual vessel on such a height that per dosage the liquid to be dosed produces only small fluctuations or changes in the total hydrostatic pressure.

These devices and working methods show different drawbacks : technically complex, high cost price, low operational safety and low reproducibility.

An objet of the invention is therefore a pressure vessel for supplying a liquid at a constant flow rate according to the invention which assures the desired constant flow rate with technically reliable and very simple means.

In order to enable this according to the invention, the pressure vessel according to the invention comprises : a) an airtight lockable filling opening for topping up with liquid ; b) at the bottom or substantially at the bottom an outlet opening for allowing the liquid to flow out of the pressure vessel, and c) a vertically or substantially vertically extending tube passing through the pressure vessel down to a level lower than the liquid level so that the hydrostatic pressure on the outlet opening remains constant.

In a preferably applied embodiment said tube passes through a screw cap closing off said filling opening in an airtight way.

According to a possible variant thereof, said vertical tube is slidably mounted in said screw cap in an airtight way.

Other details and advantages of the invention will become apparent from the drawing annexed hereto wherein :
Figure 1 is a front elevational view of the pressure vessel according to the invention ;
Figure 2 is a side elevational view of the same pressure vessel.

The pressure vessel shown by these figures has to be undeformable and must be lockable in an airtight way. The pressure vessel described here by way of example may show any shape and may be provided with handles or not.

At the top, the pressure vessel 1 comprises a filling opening 2 which can be locked in an airtight way by means of a screw cap 3.

At the bottom or substantially at the bottom, the outlet opening 4 is provided.

A vertical or if necessary an oblique tube 5 crosses the screw cap 3. This tube may be slidably mounted through the screw cap 3.

In an embodiment which has not been shown here, the tube could also be applied at the outside of the pressure vessel, of course on condition that this tube crosses the wall of the pressure vessel in an airtight way.

The intended constant liquid flow rate is achieved by pressing a liquid under a constant hydrostatic pressure through the outlet opening 4 and this at a constant temperature.

The constant hydrostatic pressure is built up in the undeformable and airtight closed off pressure vessel, which is filled with about 90 to 95 % liquid. The remaining 5 % is air.

After having closed off the pressure vessel in an airtight way, the liquid can be allowed to flow out of the pressure vessel through the discharge opening 4. The diameter of the discharge opening 4 has to be constant.

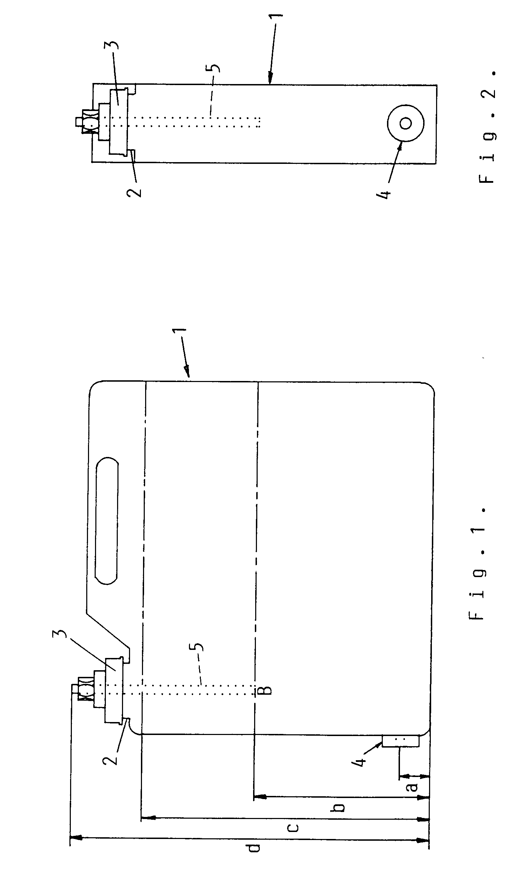

Because in the further description mention will be made of heights a, b, c, d for a good understanding of the pressure vessel, these heights are also indicated in Figure 1. The level which complies with the height d corresponds to the uppermost opening of the vertical tube 5. The height c corresponds to the maximum level of the liquid in the pressure vessel and the height b corresponds then to the lowermost opening of the vertical tube 5.

Finally, the height a corresponds to the height where the central axis of the outlet opening 4 is situated. Consequently, a communication can be achieved between the ambient air and the level corresponding to the height b.

The inlet at the top of the vertical tube 5, whatever may be the location of this vertical tube in or out of the pressure vessel, will be situated above the maximum level which corresponds to the height c.

Due to the presence of the vertical tube 5, an atmospheric pressure is achieved at the level of point B, i.e. at the level corresponding to the height b. The distance between the outlet or discharge opening 4 and the level which corresponds to the height of point B corresponds to "b-a" and determines, together with the density of the liquid, the hydrostatic pressure and thus the magnitude of the flow rate through discharge or outlet opening 4. This hydrostatic pressure remains constant in case of a decreasing liquid level until the level on height B is reached. This is due to the fact that at the level of point B there is always a constant atmospheric pressure as a result of the controlling action exerted by the vertical tube 5 which is connected at the top with the ambient air.

Thanks to this constant hydrostatic pressure, the constant specific gravity of the liquid, the constant diameter of the outlet or discharge opening 4 and also the constant temperature of the liquid, the flow rate through the discharge opening is constant.

When the liquid level reaches a level lower than that which corresponds to the height b, the hydrostatic pressure is no longer constant so that the flow rate through the outlet opening 4 is no longer constant and will vary.

The height of the different marks or levels in and outside the pressure vessel corresponding to the heights a, b and d may be of various values and the corresponding openings may be applied in the pressure vessel also on different locations while the vertical tube may be situated outside this pressure vessel on condition that the following conditions are always met :
1. d > c > b > a
2. the liquid in the pressure vessel comes only into contact with the ambient air through the vertical tube 5 and through the outlet opening 4.

The magnitude of the liquid flow flowing constantly out of the pressure vessel can be controlled by changing the hydrostatic pressure. This can be achieved i.a. by mounting the vertical tube 5 slidably and airtight through the screw cap 3. The flow rate of the liquid can also be adjusted by mounting a constant or fixed adjustable restriction onto the outlet opening 4.

Of course, the invention is not restricted to the hereinabove described embodiment and many modifications could be applied thereto in as far as these modifications fall within the scope of the appended claims.

As a technically equivalent solution it can also be proposed to provide no filling opening so that also the screw cap is omitted. In this case, the vessel could be filled through the outlet opening.

## Claims

1. A pressure vessel for supplying a liquid at a constant flow rate, characterized in that it comprises : a) an airtight lockable filling opening for introducing the liquid ; b) at the bottom or substantially at the bottom an outlet opening (4) for allowing the liquid to flow out of the pressure vessel, and c) a vertically or substantially vertically extending tube (5) passing through the pressure vessel down to a level lower than the liquid level so that the hydrostatic pressure on the outlet opening remains constant.

2. A pressure vessel according to claim 1, characterized in that said tube (5) passes through a screw cap (3) closing off said filling opening (2) in an airtight way.

3. A pressure vessel according to claim 2, characterized in that said vertical tube (5) is slidably mounted in said screw cap (3) in an airtight way.

4. A pressure vessel according to any one of the claims 1-3, characterized in that said outlet opening (4) comprises means for adjusting the flow rate through this outlet opening.

5. A pressure vessel according to any one of the claims 1-4, characterized in that the outlet opening (4) serves as filling opening when omitting said filling opening.
